# EUROPEAN PATENT APPLICATION

(11) **EP 1 302 701 A1**
(43) Date of publication of application: **16.04.2003**
(21) Application number: 02017753.1
(22) Date of filing: 08.08.2002
(51) Int. Cl.: F16H 57/04

(54) **Lubrication device for an automatic transmission**

(30) Priority: 11.10.2001 KR 2001062613
(71) Applicant: HYUNDAI MOTOR COMPANY, Seoul (KR)
(72) Inventor: Min, Jun-Ho, Songnam-City, Kyungki-Do, 463-050 (KR); Jang, Jae-Duk, Yongin-City, Kyungki-Do, 449-912 (KR)
(74) Representative: Viering, Jentschura & Partner

(57) **Abstract**

A lubrication device for an automatic transmission adapted to change a lubrication method relative to both taper roller bearings (18,20) for rotatably supporting an output shaft (12) of the automatic transmission between the automatic transmission case (16) and torque converter housing (14), thereby promoting a smooth lubrication in relation to both taper roller bearings even when the operation oil temperature is low and improving the durability of the taper roller bearings.

## Description

### FIELD OF THE INVENTION

The present invention relates to a lubrication device for an automatic transmission, and more particularly, to a lubrication device for an automatic transmission adapted to change the lubrication method relative to both taper roller bearings for rotatably supporting the output shaft of the automatic transmission between the transmission case and torque converter housing, thereby promoting a smooth lubrication in relation to both taper roller bearings even when the operation oil temperature is low, and improving durability of the taper roller bearings.

### BACKGROUND OF THE INVENTION

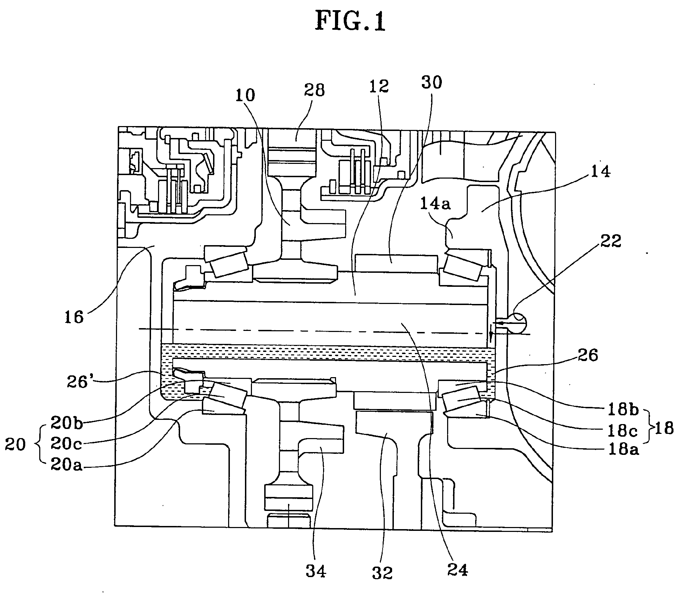

As illustrated in Figure 1, the conventional output shaft 12 of the automatic transmission with the transfer driven gear 10 mounted by a slip joint method is rotatably supported by a first taper roller bearing 18 and a second taper roller bearing 20 respectively installed at both tip ends thereof at the torque converter housing 14 and automatic transmission case 16.

Outer races 18a and 20a of the first and second roller bearings 18 and 20 are respectively secured at the torque converter housing 14 and the automatic transmission case 16 while inner races 18b and 20b thereof are respectively fixed at both tip ends of the output shaft 12. Between the outer races 18a and 20a and the inner races 18b and 20b, there are mounted taper rollers 18c and 20c in a rolling fashion.

The torque converter housing 14 comprises a first lubrication oil passage 22 formed by passing through walls of the housing 14 and opened at a longitudinal end thereof toward the output shaft 12.

The output shaft 12 is centrally formed with a second lubrication oil passage 24 pierced along the lengthwise direction of the output shaft 12.

The first and second lubrication oil passages 22 and 24 are arranged in a mutually communicable manner at a neighboring area of the torque converter housing 14 via a predetermined size of the gap 26 formed between the output shaft 12 and the torque converter housing 14, and there is also another predetermined size of the gap 26' between the output shaft 12 and the automatic transmission case 16.

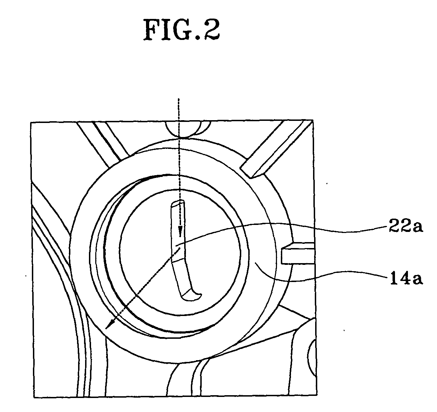

As illustrated in Figure 2, the first lubrication oil passage 22 is provided with a slit inlet 22a vertically and lengthily slit at a central area of a protrusive boss 14a formed to accommodate the outer race 18a of the first taper roller bearing 18.

Reference numeral 28 in the drawing is a transfer drive gear mounted at the input shaft for meshing with the transfer driven gear 10, reference numeral 30 is an output gear disposed on the output shaft 12, 32 is a drive gear of differential gear meshing with the output gear, and 34 is a parking gear meshing with a parking sprag integrally formed at a lateral area of the transfer driven gear 10 while a vehicle is parked.

Lubrication is effected in the following method in an automatic transmission equipped with the output shaft 12 thus mounted.

First, the operational oil discharged by the drive of the oil pump (not shown) reaches a position where the output shaft 12 is located through the first lubrication oil passage 22 formed at the torque converter housing 14. The operational oil is then infused into the automatic transmission through the slit inlet 22a centrally formed at the boss 14a of the torque converter housing 14.

The operational oil introduced into the automatic transmission is led into the gap 26 between the output shaft 12 and the torque converter housing 14 to fill the gap and initially promote lubrication in the first taper roller bearing 18.

Successively, the operational oil having filled the entire gap 26 comes to fill another gap 26' formed between the output shaft 12 and the automatic transmission case 16 through the second lubrication oil passage 24 centrally defined at the output shaft 12, thereby promoting lubrication in the second taper roller bearing 20.

In other words, lubrication to the first taper roller bearing 18 positioned near the torque converter housing 14 is initially performed and lubrication to the second taper roller bearing 20 located adjacent to the automatic transmission case 16 is thereafter effected through the extra operational oil. Thus, lubrication to the second taper roller bearing 20 is possible as long as quantity of operational oil supplied through the first lubrication oil passage 22 exceeds a standard value (excessive enough to fill the gap 26).

However, there is a problem in the operational oil for promoting the lubrication in the first and second taper roller bearings 18 and 20 thus described in that the viscosity of the operational oil is high before the temperature thereof rises above a predetermined degree, to thereby show an inferior mobility or fluidity.

In other words, there is a problem in that, although sufficient quantity of operational oil is needed for simultaneously lubricating the first and second taper roller bearings 18 and 20, the operational oil becomes insufficient in quantity which is infused through the first lubrication oil passage 22 formed at the housing 14 due to the decreased mobility in case the temperature is low, such that, although there is no particular problem in the lubrication of the first taper roller bearing 18 near the torque converter housing 14, lubrication of the second taper roller bearing 20 close to the automatic transmission case 16 cannot be performed smoothly before the temperature of the operational oil rises above a predetermined degree to recover mobility of the operational oil, thereby causing insufficient lubrication to the first and second taper roller bearings 18 and 20 at the same time, resulting in generation of eccentric friction and shortened life of the bearings.

### SUMMARY OF THE INVENTION

The present invention provides a lubrication device for an automatic transmission constructed to adopt a forced infusion and dispersion method for promoting a forced supply of operational oil by way of centrifugal force when lubrication oil is supplied to the taper roller bearings rotatably supporting both ends of the output shaft of the automatic transmission such that a decrease in lubrication performance resulting from a lack of mobility due to a drop in lubrication oil temperature can be prevented, thereby-maximizing the durable life of the taper roller bearings.

In accordance with the present invention, a lubrication device for an automatic transmission comprises a first lubrication oil passage formed inside a torque converter housing, and a second lubrication oil passage communicable formed with the first lubrication oil passage within an output shaft rotatably supported via first and second taper roller bearings between the torque converter housing and an automatic transmission case.
The first lubrication oil passage is provided at an inlet thereof with a first cap seal member equipped with an orifice. The second lubrication oil passage is provided at an inlet thereof with a second cap seal member equipped with a plurality of through holes. Thus, the operational oil ejected under high pressure from the orifice of the first cap seal member passes or is dispersed through the plurality of through holes of the second cap seal member, thereby promoting the lubrication of the first and second taper roller bearings.

### BRIEF DESCRIPTION OF THE DRAWINGS

For fuller understanding of the nature and objects of the invention, reference should be made to the following detailed descriptions taken in conjunction with the accompanying drawings in which:
FIG.1 is a partial sectional view of the output shaft supporting the transfer driven gear of an automatic transmission and a lubrication passage mounted thereon according to the prior art;
FIG. 2 is a perspective view illustrating mounted areas of the taper roller bearings installed at the torque converter housing shown in Figure 1;
FIG. 3 is a sectional view partially illustrating an output shaft area supporting the transfer driven gear of an automatic transmission and lubrication oil passages and lubrication device mounted thereto according to the present invention;
FIG. 4 is a perspective view illustrating mounted areas of the taper roller bearings mounted at the torque converter housing illustrated in FIG. 3; and
Figure 5 is a plan illustrating through holes formed at the second cap seal member illustrated in FIG. 3.

### DETAILED DESCRIPTION OF THE INVENTION

Hereinafter, the embodiments of the present invention will be described in detail with reference to the accompanying drawings.

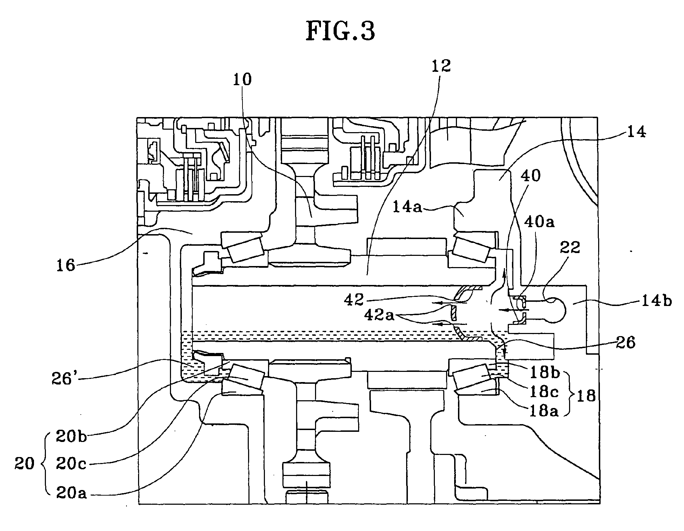

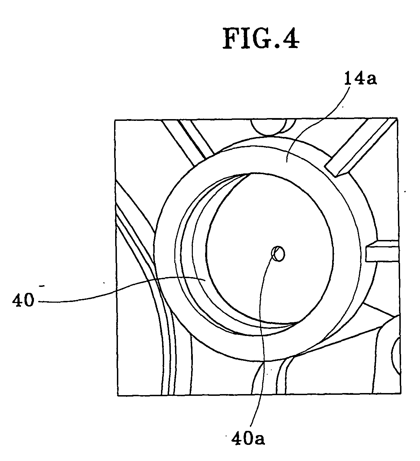

Through FIGS. 3 to 5, like reference numerals are used for designation of like or equivalent parts or portions as in Figure 1 for simplicity of explanation.

As shown in FIG. 3, both ends of output shaft 12 mounting a transfer driven gear 10 by way of a slip joint method are rotatably supported by a first taper roller bearing 18 and a second taper roller bearing 20 respectively secured at a torque converter housing 14 and an automatic transmission case 16.

Outer races 18a and 20a of the first and second roller bearings 18 and 20 are respectively secured at the torque converter housing 14 and the automatic transmission case 16 while inner races 18b and 20b thereof are respectively fixed at both ends of the output shaft 12. Taper rollers 18c and 20c are mounted in a rolling fashion between the outer races 18a and 20a and the inner races 18b and 20b. The outer race 18a of the first taper roller bearing 18 is centrally fixed at a boss 14a protrusively formed at the torque converter housing 14.

The torque converter housing 14 is formed with a first lubrication oil passage 22 folded approximately at a right angle for passing through the walls of the housing 14 and for being opened at a longitudinal end thereof toward the output shaft 12.

The output shaft 12 is centrally formed with a second lubrication oil passage 24 piercing along the lengthwise direction of the output shaft 12.

The first and second lubrication oil passages 22 and 24 are arranged in a mutually communicable manner at a neighboring area of the torque converter housing 14 in between the predetermined size of gap 26 formed between the output shaft 12 and the torque converter housing 14, and there is also another predetermined size of gap 26' between the output shaft 12 and the automatic transmission case 16.

At an inlet of the first lubrication oil passage 22 formed at the torque converter housing 14, there is a first cap seal member 40 centrally equipped thereon with an orifice. A second cap seal member equipped with a plurality of through holes 42a at an inlet of the second lubrication oil passage 24 is insertedly formed on the output shaft 12 corresponding to the first cap seal member 40.

The first lubrication oil passage 22 is formed at a boss 14b protrusively formed at the wall of the torque converter housing 14 on the right side of the drawing. The first lubrication oil passage 22 is so configured as to promote a smooth installation of the first capsule member 40 mounted at an inlet side of the first lubrication oil passage 22 at the torque converter housing 14 because the thickness of the member defining the torque converter housing 14 is realized in a rather insufficient degree for installation of the first cap seal member 40.

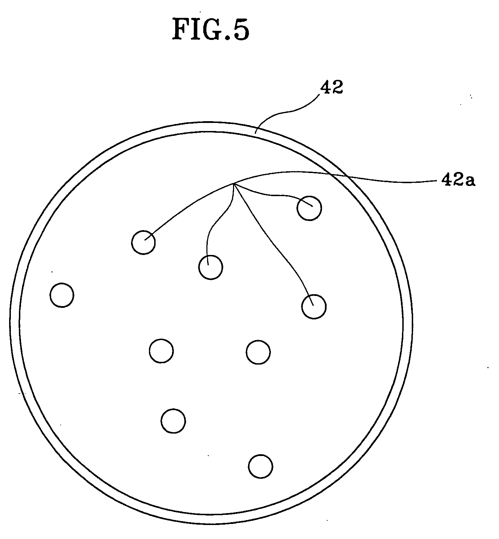

As shown in FIG. 5, the plurality of through holes 42a at the second cap seal member 42 are concentrically and radially formed, each being spaced apart from each other in the center of the member 42 in varying distances, where a portion of high pressure operational oil having passed the orifice 40a of the first cap seal member 40 is infused into the gap 26 formed between one end of the output shaft 12 and the torque converter housing 14 while the balance of the operational oil is introduced into the gap 26' defined between the other end of the output shaft 12 and the automatic transmission case 16, thereby promoting an equal distribution of the operational oil.

As a result, the operational oil discharged in response to the drive of the oil pump (not shown) initially reaches a position where the output shaft 12 is located through the first lubrication oil passage 22 formed at the boss 14b of the torque converter housing 14. The operational oil is then ejected towards one end of the second lubrication oil passage 24 disposed at the output shaft 12 through the orifice 40a centrally formed at the first cap seal member 40 mounted at the inlet side of the first lubrication oil passage 22.

The operational oil injected toward the second lubrication oil passage 24 at the output shaft 12 is ejected through the orifice 40a, thereby being discharged under high pressure compared with the prior art, such that part of the operational oil thus ejected hits the front side of the second cap seal member 42, thereafter being dispersed and infused into the gap 26 at the torque converter housing 14, thereby promoting lubrication relative to the first taper roller bearing 18 mounted thereto. The balance of the operational oil passes the through holes 42a at the second cap seal member 42 and again passes the second lubrication oil passage 24 to be introduced into the gap 26' at the automatic transmission case 16, thereby promoting lubrication relative to the second taper roller bearing 20 disposed thereto.

The lubrication method thus described according to the present invention is different from the method according to the prior art in that high pressured operational oil having passed the orifice 40a at the first cap seal member 40 is supplied respectively to the gaps 26 and 26' formed at both ends of the output shaft 12 by way of forced infusion and dispersion method via the second cap seal member 42 installed at the second lubrication oil passage 24 at the output shaft 12, thereby promoting a smooth lubrication to the first and second taper roller bearings 18 and 20 rotatably supporting both ends of the output shaft 12.

Thus, the first and second taper roller bearings 18 and 20 rotatably supporting both ends of the output shaft 12 can be smoothly lubricated even before the operational oil is fully raised in temperature thereof to recover enough mobility, thereby enabling to prevent eccentric friction of the bearings and maximizing the durable life of the bearings.

As apparent from the foregoing, there is an advantage in the lubrication device for an automatic transmission thus described according to the present invention in that the first and second taper roller bearings 18 and 20 mounted on both ends of the output shaft 12 equipped with the transfer driven gear 10 being meshed with a transfer drive gear mounted at an input shaft of the automatic transmission for receiving a driving force can be lubricated by a forced infusion and dispersion method, thereby enabling to eliminate the problem of insufficient lubrication due to decreased mobility when the operational oil is low in temperature thereof and to increase durability of the taper roller bearings.

## Claims

1. A lubrication device for an automatic transmission, the device comprising:
a first lubrication oil passage formed inside a torque converter housing;
a second lubrication oil passage communicably formed with the first lubrication oil passage within an output shaft rotatably supported via first and second taper roller bearings between a torque converter housing and an automatic transmission case;
a first cap seal member equipped with an orifice at an inlet of said first lubrication oil passage; and
a second cap seal member equipped with a plurality of through holes at an inlet of the second lubrication oil passage, wherein the operational oil ejected under high pressure from the orifice of the first cap seal member passes or is dispersed through the plurality of through holes of the second cap seal member, thereby promoting the lubrication of the first and second taper roller bearings.

2. The device as defined in claim 1, wherein the torque converter housing defining said first lubrication oil passage is integrally formed with a boss expanded in thickness thereof for installation of said first cap seal member.

3. The device as defined in claim 1, wherein the plurality of through holes of said second cap seal member are concentrically and radially arranged, each being spaced apart from each other in varying distances.
